Europäisches Patentamt

European Patent Office

Office européen des brevets

(19)

(11) Veröffentlichungsnummer: **0 205 928**
**B1**

(12)

# EUROPÄISCHE PATENTSCHRIFT

(45) Veröffentlichungstag der Patentschrift:
**26.10.88**

(21) Anmeldenummer: **86106896.3**

(22) Anmeldetag: **21.05.86**

(51) Int. Cl.⁴: **B 60 T 17/18**, B 60 T 13/68

(54) **Schaltungsaordnung zur Erkennung eines Leitungsbruches bei einer elektropneumatischen Fahrzeugbremsanlage mit vom Zugfahrzeug gesteuerter Anhängerbremse.**

(30) Priorität: **14.06.85 DE 3521446**

(43) Veröffentlichungstag der Anmeldung:
**30.12.86 Patentblatt 86/52**

(45) Bekanntmachung des Hinweises auf die Patenterteilung:
**26.10.88 Patentblatt 88/43**

(84) Benannte Vertragsstaaten:
**DE FR GB IT NL SE**

(56) Entgegenhaltungen:
**EP - A - 0 014 369**
**DE - A - 1 505 523**
**DE - B - 1 039 857**
**GB - A - 2 131 509**
**US - A - 2 573 442**
**US - A - 4 317 988**

(73) Patentinhaber: **KNORR-BREMSE AG, Moosacher Strasse 80 Postfach 401060, D-8000 München 40 (DE)**

(72) Erfinder: **Broch, Walter, Hauptstrasse 15, D-8061 Wiedenzhausen (DE)**
Erfinder: **Kessel, Gerd, Dr., Lechweg 15, D-8037 Olching (DE)**
Erfinder: **Schauer, Winfried, Dr., Welfenstrasse 14a, D-8011 Poing (DE)**
Erfinder: **Straub, Laszlo, Max-Löw-Strasse 12, D-8014 Neubiberg (DE)**

**Beschreibung**

Die Erfindung bezieht sich auf eine Schaltungsanordnung zur Erkennung eines Leitungsbruches bei einer elektro-pneumatischen Fahrzeugbremsanlage mit vom Zugfahrzeug gesteuerter Anhängerbremse gemäss dem Oberbegriff des Patentanspruches 1.

Elektro-pneumatische Bremsanlagen, bei denen das Sollwertsignal des Bremsdruckes elektrisch bzw. elektronisch erzeugt und in einem elektro-pneumatischen Wandler (im folgenden EP-Wandler) in einen pneumatischen Druck umgewandelt wird, sind seit langem bekannt. Entsprechende EP-Wandler sind ebenfalls bekannt (vgl. DE-A-2 811 345, EP-B1-0 014 369, DE-A-2 508 409, DE-A-2 811 345, FR-A-2 293 736 und US-A-3 807 810).

Weiterhin sind Anhängerbremsen für Nutzfahrzeuge bekannt, (beispielsweise DE-A-1 505 523 oder DE-B-1 039 857), die über zwei pneumatische Leitungen mit dem Zugfahrzeug verbunden sind, nämlich eine Versorgungsdruckleitung und eine Steuerdruckleitung. Im Anhänger ist dann ein Druckbehälter und ein Bremsventil angeordnet, wobei die Anhängerbremse dann anspricht, wenn der Druck auf der Steuerdruckleitung erhöht wird. Bei Druck Null auf der Steuerdruckleitung ist die Bremse also gelöst. Umgekehrt ist bei hohem Druck auf der Versorgungsdruckleitung die Bremse gelöst, während bei vollständig entlüfteter Versorungsdruckleitung der Anhänger vollständig eingebremst ist.

Ein Bruch der Versorgungsdruckleitung hat damit automatisch zur Folge, dass der Anhänger voll eingebremst wird. Dies entspricht den üblichen Sicherheitsanforderungen und ist daher unproblematisch.

Ein Bruch der Steuerdruckleitung (bei intakter Versorgungsdruckleitung) hat dagegen zur Folge, dass die Anhängerbremse voll gelöst ist und dass nicht mehr gebremst werden kann. Diesen gefährlichen Zustand gilt es zu erkennen, damit geeignete Gegenmassnahmen, nämlich eine Bremsung bei Bruch der Steuerdruckleitung, eingeleitet werden können.

Unter den vorstehend erwähnten Brüchen von Leitungen sind auch nur teilweise Brüche dieser Leitungen zu verstehen, welche zu blossen Undichtigkeiten der genannten Leitungen führen, wobei die erwähnten Folgen nicht in voller Schärfe auftreten. Im folgenden ist unter Leitungsbruch auch stets eine Leitungsundichtigkeit zu verstehen.

Aus der GB-A 2 131 509 ist eine elektropneumatische Fahrzeugbremsanlage bekannt, bei welcher die Druckbeaufschlagung der Triebfahrzeug-Bremszylinder vermittels eines ein elektrisches Steuerteil zum Ansteuern einer elektrischen Kontrolleinheit aufweisenden Trittplattenbremsventils und von der Kontrolleinheit erregbarer Magnetventile erfolgt. Bei Ausfall der elektrischen Steuerung übernimmt ein über Doppelrückschlagventile an die Triebfahrzeug-Bremszylinder angeschlossener Pneumatikteil des Trittplattenbremsventils die Beaufschlagungssteuerung. Weiterhin ist eine Versorgungsdruckleitung für eine Anhängerbremse vorgesehen, an welche im Triebfahrzeug über ein von der Kontrolleinheit ansteuerbares Magnetventil sowie ein Doppelrückschlagventil auch eine Steuerdruckleitung zum Anhänger angeschlossen ist; der zweite Eingang des Doppelrückschlagventils ist vom Pneumatikteil des Trittplattenbremsventils druckbeaufschlagbar. An die Steuerdruckleitung ist zwischen dem Doppelrückschlagventil und dem Kupplungskopf für den Anschluss der Anhängerbremse ein Druck-Spannungswandler angeschlossen, welcher der Kontrolleinheit ein der jeweiligen Ruckhöhe entsprechendes Signal zuführt. Dem Kupplungskopf der Versorgungsdruckleitung ist ein auf Durchgang oder Entlüftung des zum Kupplungskopf führenden Leitungsabschnittes schaltbares, von der Kontrolleinheit überwachtes Magnetventil vorgeschaltet. Es sind keine elektrischen Leitungsverbindungen zum Anhänger vorhanden. Falls während Bremsungen der Druck-Spannungswandler einen ungenügenden Druckaufbau in der Steuerdruckleitung meldet, steuert die Kontrolleinheit über das Magnetventil in die Versorgungsdruckleitung eine Entlüftung ein, was zum Ansprechen der Anhängerbremsen führt. Infolge dynamischer Strömungsvorgänge ist es jedoch möglich, dass der Druckaufbau in der Steuerdruckleitung von den der Kontrolleinheit vorgegebenen Werten abweicht, wodurch ein unnötiges Entlüften der Versorgungsdruckleitung ausgelöst werden kann.

Aufgabe der Erfindung ist es daher, eine Schaltungsanordnung zum Erkennen des Leitungsbruches bei einer elektro-pneumatischen Fahrzeugbremsanlage der im Oberbegriff des Patentanspruches 1 angegebenen Art zu schaffen, die sicher arbeitet.

Diese Aufgabe wird durch die in den Patentansprüchen 1 bzw. 4 angegebenen Merkmale gelöst. Vorteilhafte Ausgestaltungen und Weiterbildungen der Erfindung sind den Unteransprüchen zu entnehmen.

Der Grundgedanke der Erfindung liegt also darin, dass ein Bruch der Steuerdruckleitung über den im EP-Wandler ohnehin vorhandenen Druck-Spannungswandler und gegebenenfalls zu lange Belüftungszeiten (Zeit der Drucknachspeisung auf der Versorgungsdruckleitung) erkannt wird. Ist der gemessene Druck auf der Steuerleitung gleich oder nahezu Null, jedenfalls aber für die eingesteuerte Bremsung zu niedrig, und wird gegebenenfalls über das Nachspeiseventil gleichzeitig aufgrund einer Anforderung für eine vorgegebene Zeitdauer Druck auf der Vorsorgungsdruckleitung nachgespeist, so ist der Leitungsbruch erkannt.

Hierauf wird eine weitere Nachspeisung auf der Versorgungsdruckleitung durch Absperren des Nachspeiseventils verhindert. Weiterhin wird die Versorgungsdruckleitung über den EP-Wandler zur Atmosphäre oder zur (gebrochenen) Steuerdruckleitung entlüftet.

Im folgenden wird die Erfindung anhand eines Ausführungsbeispieles im Zusammenhang mit der Zeichnung ausführlicher erläutert. Es zeigt:

Fig. 1 ein Blockschaltbild der Anhängerbremse, bei der die Schaltungsanordnung nach der Erfindung zum Einsatz kommt;

Fig. 2 ein detailliertes Blockschaltbild der Schaltungsanordnung nach der Erfindung; und

Fig. 3 ein noch detaillierteres Prinzipschaltbild der Überwachungs-Elektronik.

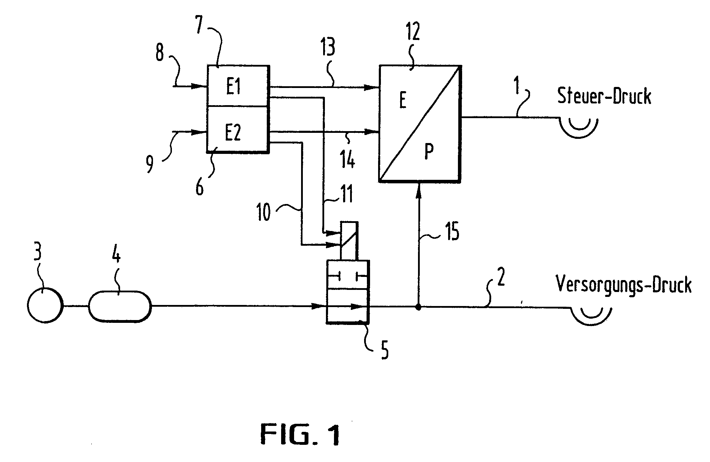

Die Bremsanlage zur Ansteuerung der Anhängerbremse gemäss Fig. 1 besitzt eine Steuerdruckleitung 1 und eine Versorgungsdruckleitung bzw.

Nachspeiseleitung 2. Über einen herkömmlichen Druckerzeuger mit Kompressor 3 und Vorratsbehälter 4 wird ein elektro-magnetisch betätigbares Nachspeisventil 5 mit Versorgungsdruck beaufschlagt, wobei dieses Ventil 5 in der Versorgungsdruckleitung 2 liegt. Die Aufbereitung der elektrischen Bremsanforderungssignale erfolgt hier aus Sicherheitsgründen in zwei getrennten Elektronik-Schaltkreisen 6 und 7, denen über Leitungen 8 und 9 elektrische Bremsanforderungssignale zugeführt werden. Diese Bremsanforderungssignale können beispielsweise von Potentiometern stammen, die durch einen Fussbremshebel verstellt werden. Beide Elektronik-Schaltkreise 6 und 7 steuern einerseits über Leitungen 10 bzw. 11 gemeinsam den Magneten des Nachspeiseventils 5 und über Leitungen 13 bzw. 14 einen EP-Wandler 12 an. Die Druckluftzufuhr zu dem EP-Wandler 12 erfolgt über eine Leitung 15, die stromabwärts des Nachspeiseventils 5 an die Versorgungsdruckleitung 2 angeschlossen ist. Der pneumatische Ausgang des EP-Wandlers 12 ist an die Steuerdruckleitung 1 angeschlossen.

Beim anfänglichen Lösen der Bremsen öffnen die Elektronik-Schaltkreise 6 bzw. 7 das Nachspeiseventil 5, bis auf der Versorgungsdruckleitung 2 ein voreingestellter Druck vorhanden ist und auch die Druckbehälter im Anhänger diesen Druck haben. Bei einer normalen Betriebsbremsung wird von den Elektronik-Schaltkreisen 6 und 7 über die Leitungen 13 und 14 ein entsprechendes Steuersignal an den EP-Wandler 12 gegeben, der den Steuerdruck auf der Steuerdruckleitung 1 je nach Bremsanforderung einstellt. Sinkt der Druck auf der Versorgungsdruckleitung 2 unter einen vorgegebenen Wert ab, so wird durch Öffnen des Nachspeiseventils 5 nachgespeist.

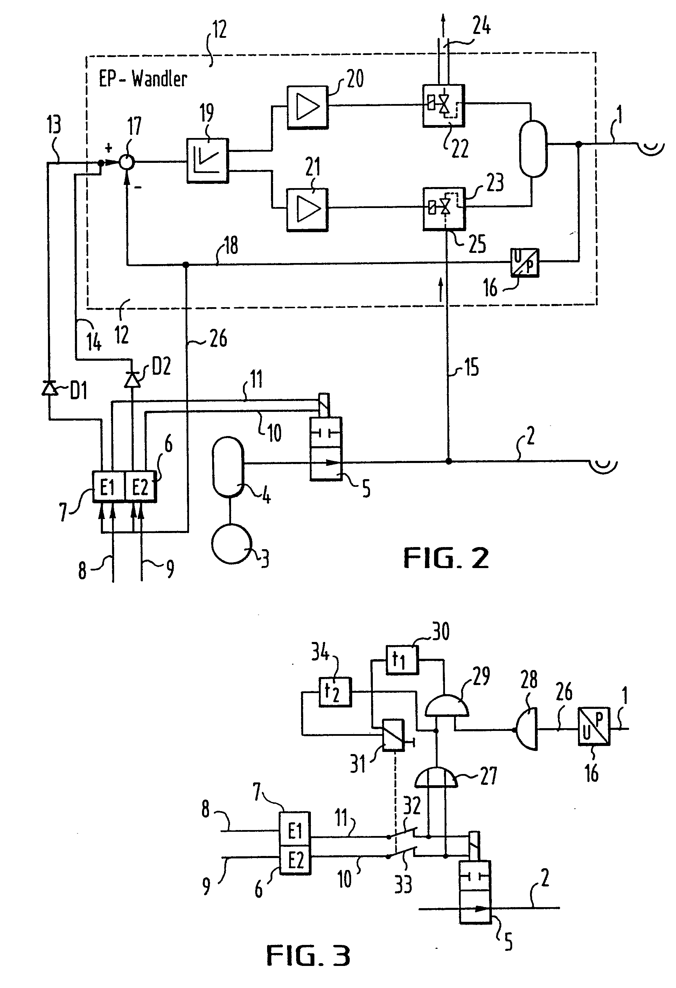

Fig. 2 zeigt detaillierter ein Blockschaltbild der Schaltungsanordnung nach der Erfindung. Der an sich aus dem eingangs genannten Stand der Technik bekannte EP-Wandler 12 besitzt einen Druckaufnehmer in Form eines Druck-Spannungswandlers 16, der an den Ausgang des EP-Wandlers, d.h. an die Steuerdruckleitung 1 pneumatisch angeschlossen ist. Ein dem gemessenen Druck proportionales elektrisches Signal wird über eine Leitung 18 zu einem Vergleicher 17 gegeben, an dessen anderen Eingang die Ausgangssignale der Elektronik-Schaltkreise 6 und 7 über die Leitungen 13 und 14 gegeben werden. Im dargestellten Ausführungsbeispiel arbeiten beide Leitungen 13 und 14 gemeinsam auf einen Eingang des Vergleichers 17, so dass Entkopplungsdioden D1 und D2 in diesen Leitungen erforderlich sind. Das Ausgangssignal des Vergleichers wird einem Regler 19 mit PID-Charakteristik zugeführt, wobei dieser Regler auch einen Vorzeichendiskriminator aufweist. Je nach Vorzeichen der Regelabweichung wird dann über Verstärker 20 und 21 ein elektromagnetisch betätigbares Auslassventil 22 oder ein entsprechendes Einlassventil 23 erregt. Die pneumatischen Ausgänge dieser Ventile 22 und 23 werden gegebenenfalls über einen zwischengeschalteten Druckbehälter mit der Steuerdruckleitung 1 verbunden. Der Ausgang 24 des Auslassventils 22 ist mit Atmosphäre verbunden; der Eingang 25 des Einlassventils 23 ist mit der Leitung 15 verbunden.

Zur Realisierung der Leitungsbrucherkennung ist nun der Ausgang des Druckspannungswandlers 16 über eine Leitung 26 mit den Auswerte-Schaltkreisen 6 und 7 verbunden. Beide Elektronik-Schaltkreise 6 und 7 prüfen nun, ob der Druck-Spannungswandler den Druck «Null» bzw. einen für die jeweilige Bremsung zu niedrigen Druck erfasst und ob gleichzeitig das Nachspeiseventil 5 geöffnet ist. Liegt dieser Zustand für eine vorbestimmte Zeitdauer vor, so gilt ein Bruch der Steuerleitung 1 als erkannt und das Nachspeiseventil 5 wird geschlossen. Alternativ oder zusätzlich können die Auswerte-Schaltkreise 6 und 7 auch prüfen, ob das Nachspeiseventil 5 für eine vorgegebene Zeitdauer geöffnet ist. Wird diese Zeitdauer überschritten, so ist dies ebenfalls ein Kriterium für einen Leitungsbruch, so dass auch dann ein Absperren des Nachspeiseventils 5 erfolgt. Obiger Zustand, d.h. Druck auf der Steuerleitung gleich «Null» und geöffnetes Nachspeiseventil 5, tritt normalerweise nur bei einer Bremsanforderung auf, bei der das Einlassventil 23 geöffnet ist. In diesem Falle ist die Versorgungsdruckleitung 2 über die Leitung 15 und das Einlassventil 23 mit der (gebrochenen) Steuerdruckleitung 1 verbunden, so dass über diesen Weg die Versorgungsdruckleitung 2 entlüftet wird. Bei intakter Steuerdruckleitung 1 ergäbe sich demgegenüber in diesem Schaltzustand ein rascher Druckaufbau in der Steuerdruckleitung 1.

In Abänderung hierzu kann die Leitungsbrucherkennung auch allein darauf beruhen, dass die Elektronik-Schaltkreise 6 und 7 während Bremsungen prüfen, ob in der Leitung 1 innerhalb einer vorgegebenen Zeitspanne ein der jeweiligen Bremsung entsprechender Druck aufgebaut wird; diese Ausführung ist für Bremsanlagen geeignet, bei welchen das Nachspeiseventil 5 gemäss bestehender Vorschriften im Normalbetrieb ständig geöffnet sein muss. Bei dieser Ausführung kann die Zuführung von die Stellung des Nachspeiseventils 5 anzeigenden Signalen zu den Elektronikschaltkreisen 6 und 7 entfallen.

Fig. 3 zeigt eine detaillierte Darstellung eines der ersterwähnten Realisierung der Leitungsbrucherkennung entsprechenden Ausführungsbeispieles der Überwachungs-Elektronik. Die beiden zum Magneten des Nachspeiseventils 5 führenden Leitungen 10 und 11 sind je an einen Eingang eines Oder-Gatters 27 angeschlossen, das dann ein Ausgangssignal (logische «1») erzeugt, wenn das Nachspeiseventil 5 erregt ist, d.h. in Durchlassstellung steht. Der Ausgang des Druck/Spannungs-Wandlers 16 ist über die Leitung 26 mit einem Inverter 28 verbunden, der dann ein Ausgangssignal (logische «1») abgibt, wenn der vom Druck/Spannungs-Wandler 16 gemessene Druck unter einem vorgegebenen Schwellwert liegt, wobei dieser Schwellwert in der Nähe des Druckes «Null» liegt. Die Ausgänge des Inverters 28 und des Oder-Gatters 27 werden je einem Eingang eines Und-Gatters 29 zugeführt, dessen Ausgang dann ein Signal (logische «1») führt, wenn beide Schaltglieder 27 und 28 ein Ausgangssignal führen. Mit anderen Worten erkennt das Und-Gatter 29, ob gleichzeitig der Druck auf der Steuerleitung gleich Null ist und das Nachspeiseventil 5 in Nachspeisestellung steht. Da dieser Zustand kurzfristig auch beim Einbremsen auftreten kann, was noch keinen Leitungsbruch signalisiert, wird nun durch ein Zeitglied 30 geprüft, ob dieser Zustand länger als eine vorgegebene Zeit andauert. Ist dies der Fall, so schaltet das Schaltglied 30 nach der fest vorgegebenen Zeitdauer $t_1$ durch und erregt ein Relais 31, das zwei Schalter 32 und 33 öffnet, die in die Leitungen 10 bzw. 11 eingeschaltet sind. Damit wird die Stromzufuhr zum Nachspeiseventil 5 unterbrochen, so dass es durch Federkraft in seine Absperrstellung fällt. Eine weitere Nachspeisung kann damit nicht mehr erfolgen. Die Versorgungsdruckleitung 2 wird — wie oben beschrieben — entlüftet.

Als weitere Variante wird der Ausgang des Oder-Gatters 27 einem zweiten Zeitglied 34 zugeführt, das nach Ablauf einer vorgegebenen Zeitdauer $t_2$ ebenfalls das Relais 31 erregt. Die Zeitdauer $t_2$ ist dabei länger als die Zeitdauer $t_1$. Steht das Nachspeiseventil 5 länger als die Zeitdauer $t_2$ in der Nachspeisestellung, so signalisiert dies ebenfalls einen Fehler (Bruch einer der Leitungen 1 oder 2) so dass auch dann durch Öffnen der Schalter 32 und 33 das Nachspeiseventil 5 gesperrt wird.

Kurz zusammengefasst überprüft die Schaltungsanordnung nach der Erfindung, ob bei einer Bremsanforderung der Druck auf der Steuerleitung 1 innerhalb einer vorgegebenen Zeitdauer ansteigt. Ist dies nicht der Fall, so wird gegebenenfalls die Stellung des Nachspeiseventils abgefragt. Ist dieses in der Nachspeisestellung, d.h. geöffnet, und erhöht sich der Druck auf der Steuerleitung nicht, so ist der Leitungsbruch der Steuerleitung erkannt.

**Patentansprüche**

1. Schaltungsanordnung zur Erkennung eines Leitungsbruches bei einer elektro-pneumatischen Fahrzeugbremsanlage mit vom Zugfahrzeug gesteuerter Anhängerbremse mit einer Steuerdruckleitung (1) und einer Versorgungsdruckleitung (2), wobei ein elektrisches Steuersignal in einem elektro-pneumatischen Wandler (EP-Wandler 12) in einen Steuerdruck umgewandelt wird und der EP-Wandler einen Druck/Spannungs-Wandler (16) aufweist, der ein dem gemessenen pneumatischen Druck entsprechendes elektrisches Signal erzeugt, und mit einem in der Versorgungsleitung zwischengeschalteten Nachspeiseventil (5), dadurch gekennzeichnet, dass eine Überwachungselektronik (6, 7) vorhanden ist, der das Ausgangssignal des Druck/Spannungs-Wandlers (16) zugeführt wird, wobei ein Leitungsbruch der Steuerdruckleitung (1) dann identifiziert ist, wenn für eine vorbestimmte Zeitdauer (Zeitglied 30) das Ausgangssignal des Druck/Spannungs-Wandlers (16) einen für die eingesteuerte Bremsung zu niedrigen Druck, gegebenenfalls den Druck «Null» anzeigt und gleichzeitig das Nachspeiseventil (5) für diese Zeitdauer geöffnet ist.

2. Schaltungsanordnung nach Anspruch 1, dadurch gekennzeichnet, dass die Überwachungselektronik das Nachspeiseventil (5) bei erkanntem Leitungsbruch sperrt.

3. Schaltungsanordnung nach Anspruch 1 oder 2, dadurch gekennzeichnet, dass der Überwachungselektronik (6, 7) zusätzlich ein den Schaltzustand des Nachspeiseventils (5) repräsentierendes Signal zugeführt wird.

4. Schaltungsanordnung zur Erkennung eines Leitungsbruches bei einer elektro-pneumatischen Fahrzeugbremsanlage mit vom Zugfahrzeug gesteuerter Anhängerbremse mit einer Steuerdruckleitung (1) und einer Versorgungsdruckleitung (2), wobei ein elektrisches Steuersignal in einem elektro-pneumatischen Wandler (EP-Wandler 12) in einen Steuerdruck umgewandelt wird und der EP-Wandler einen Druck/Spannungs-Wandler (16) aufweist, der ein dem gemessenen pneumatischen Druck entsprechendes elektrisches Signal erzeugt, und mit einem in der Versorgungsleitung zwischengeschalteten Nachspeiseventil (5), dadurch gekennzeichnet, dass eine Überwachungselektronik (6, 7) vorhanden ist, der ein den Schaltzustand des Nachspeiseventils (5) repräsentierendes Signal zugeführt wird, wobei ein Leitungsbruch der Steuerdruckleitung (1) dann identifiziert ist, wenn für eine vorbestimmte Zeitdauer (Zeitglied 34) das Nachspeiseventil (5) geöffnet ist.

5. Schaltungsanordnung nach Anspruch 1 oder 2, dadurch gekennzeichnet, dass die Öffnungszeit des Nachspeiseventils (5) und der Ausgangsdruck des Druck-Spannungswandlers (16) überwacht werden und dass abhängig von der Öffnungszeit und fehlendem Ausgangsdruck nach einer ersten Zeitspanne (Zeitglied 30) oder unabhängig vom Ausgangssignal des Druck/Spannungs-Wandlers (16) in Abhängigkeit allein von der Öffnungszeit nach einer zweiten Zeitspanne (Zeitglied 34) das Nachspeiseventil gesperrt wird.

6. Schaltungsanordnung nach Anspruch 4, dadurch gekennzeichnet, dass die beiden Zeitspannen (Zeitglieder 30 und 34) verschieden lang vorgegeben sind, wobei die erste Zeitspanne (Zeitglied 30) kürzer ist als die zweite Zeitspanne (Zeitglied 34).

**Claims**

1. Circuit arrangement for detecting a break in a conduit in an electro-pneumatic vehicle braking system with trailer brakes controlled by the traction vehicle, having a control pressure conduit (1) and a supply pressure conduit (2), wherein an electric control signal is converted into a control pressure in an electro-pneumatic transducer (EP-transducer 12) and the EP-transducer has a pressure/voltage-transducer (16) which produces an electric signal corresponding to the measured pneumatic pressure, and having a back-feed valve (5) interconnected in the supply conduit, characterised in that monitoring electronics (6, 7) is present, to which the output signal of the pressure/voltage-transducer (16) is fed, a break in the control pressure conduit (1) being identified when, for a predetermined duration (time function element 30), the output signal of the pressure/voltage-transducer (16) indicates a pressure which is too low for the controlled braking, possibly pressure «nil», and the back-feed valve (5) is simultaneously open for this duration.

2. Circuit arrangement according to claim 1, characterised in that the monitoring electronics locks the back-feed valve (5) when a break in the circuit is detected.

3. Circuit arrangement according to claim 1 or 2, characterised in that the monitoring electronics (6, 7) is additionally supplied with a signal representing the switching condition of the back-feed valve (5).

4. Circuit arrangement for detecting a break in a conduit in an electro-pneumatic vehicle braking system with trailer brakes controlled by the traction vehicle, having a control pressure conduit (1) and a supply pressure conduit (2), wherein an electric control signal is converted into a control pressure in an electro-pneumatic transducer (EP-transducer 12) and the EP-transducer has a pressure/voltage transducer (16) which produces an electric signal corresponding to the measured pneumatic pressure, and having a back-feed valve (5) interconnected in the supply conduit, characterised in that monitoring electronics (6, 7) is present, to which is supplied a signal representing the switching condition of the back-feed supply valve (5), a break in the control pressure conduit (1) being identified when the back-feed valve (5) is open for a predetermined duration (time function element 34).

5. Circuit arrangement according to claim 1 and 2, characterised in that the opening time of the back-feed valve (5) and the output pressure of the pressure-voltage transducer (16) are monitored and in that depending on the opening time and absence of output pressure after a first time span (time function element 30) or, independently of the output signal of the pressure/voltage transducer (16) and in dependence only on the opening time, after a second time span (time function element 34) the back-feed valve is locked.

6. Circuit arrangement according to claim 4, characterised in that both time spans (time function elements 30 and 34) are set to have different lengths, the first time span (time function element 30) being shorter than the second time span (time function element 34).

**Revendications**

1. Montage pour détecter une rupture de conduite dans une installation électro-pneumatique de freinage de véhicule comportant un frein de remorque contrôlé par le véhicule-tracteur, avec une conduite (1) de la pression de contrôle et une conduite de pression d'alimentation (2), un signal électrique de commande étant transformé en une pression de commande dans un transducteur éléctro-pneumatique (transducteur EP 12), et ledit transducteur EP comportant un transducteur pression/tension qui produit un signal électrique qui correspond à la pression pneumatique mesurée, et avec une soupape de réalimentation (5) montée dans la conduite d'alimentation, caractérisé par le fait qu'il est prévu une électronique de contrôle (6, 7) à laquelle est appliqué le signal de sortie du transducteur pression/tension (16), une rupture de la conduite de la pression de contrôle (1) étant identifiée lorsque pour une durée prédéterminée (unité de temporisation 30) le signal de sortie du convertisseur pression/tension (16) indique une pression trop basse, éventuellement la pression «nulle» pour le freinage qui a été réglé, alors qu'en même temps la soupape de réalimentation (5) est ouverte pour cette même durée.

2. Montage selon la revendication 1, caractérisé par le fait que l'électronique de contrôle ferme la soupape de réalimentation (5) lors de la détection de la rupture de la conduite.

3. Montage selon la revendication 1 ou 2, caractérisé par le fait qu'un signal représentant l'état de commutation de la soupape de réalimentation (5) est, de plus, appliqué à l'électronique de contrôle (6, 7).

4. Montage pour détecter une rupture de conduite dans une installation électro-pneumatique de freinage de véhicules comportant un frein de remorque contrôlé par le véhicule-tracteur, avec une conduite (1) de la pression de contrôle et une conduite de pression d'alimentation (2), un signal électrique de commande étant transformé en une pression de commande dans un transducteur électro-pneumatique (transducteur EP 12), et ledits transducteur EP comportant un transducteur pression/tension qui produit un signal électronique qui correspond à la pression pneumatique mesurée, et avec une soupape de réalimentation (5) montée dans la conduite d'alimentation, caractérisé par le fait qu'il est prévu une électronique de contrôle (6, 7) à laquelle est appliqué un signal qui représente l'état de commutation de la soupape de réalimentation (5), une rupture de la conduite de la pression de contrôle (1) étant identifiée si, pour une durée prédéterminée (unité de temporisation 34), la soupape de réalimentation (5) est ouverte.

5. Montage selon la revendication 1 et 2, caractérisé par le fait que la durée d'ouverture de la soupape de réalimentation (5) et la pression de sortie du transducteur pression/tension (16) sont contrôlées et qu'en fonction de la durée d'ouverture et de l'absence de la pression de sortie, et après un premier intervalle de temps (unité de temporisation 30) ou indépendamment du signal de sortie du transducteur pression/tension (16) et en fonction seulement de la durée d'ouverture, la soupape de réalimentation est fermée après un second intervalle de temps (unité de temporisation 34).

6. Montage selon la revendication 4, caractérisé par le fait que les deux intervalles de temps (unités de temporisation 30 et 34) sont prédéterminés avec des valeurs différentes, le premier intervalle de temps (unité de temporisation 30) étant plus court que le second intervalle de temps (unité de temporisation 34).

**FIG. 1**

FIG. 2

FIG. 3